(19)

Europäisches Patentamt
European Patent Office
Office européen des brevets

(11)     EP 4 125 011 A1

(12)                              EUROPEAN PATENT APPLICATION

(43) Date of publication:
      01.02.2023  Bulletin 2023/05

(51) International Patent Classification (IPC):
      **G06N 20/20** (2019.01)

(21) Application number: 21187698.2

(52) Cooperative Patent Classification (CPC):
      **G06N 20/20**

(22) Date of filing: 26.07.2021

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(71) Applicant: **Siemens Aktiengesellschaft**
     **80333 München (DE)**

(72) Inventors:
     • **Bruhn, Cecilia Margareta**
       **80807 München (DE)**
     • **Hangauer, Andreas**
       **80634 München (DE)**
     • **Lebacher, Michael**
       **84513 Töging am Inn (DE)**

(54)     **COMPUTER-IMPLEMENTED METHOD FOR GENERATING A COMBINED MACHINE LEARNING MODEL**

(57)     The invention is directed to a Computer-implemented method for generating a combined machine learning model, comprising the steps: a. Providing a trained unsupervised machine learning model for anomaly detection; wherein the unsupervised machine learning model is trained on the basis of unlabeled training data (S1); b. Determining at least one output label for each data item of a plurality of data items of unlabeled application data by applying the trained unsupervised machine learning model on the unlabeled application data with the plurality of data items; wherein the at least one determined output label is an anomaly or a normal state (S2); c.

Transmitting the at least one determined output label to a user for verifying the at least one determined output label via a user interface (S3); d. Receiving at least one processed output label, at least one additional data item or at least one additional output label from the user via the user interface or maintaining the at least one determined output label unprocessed depending on the verification by the user (S4); e. Training at least one additional machine learning model for anomaly detection in accordance with the at least one processed output label, the at least one additional data item or the at least one additional output label (S5); f.

Generating the combined machine learning model for anomaly detection using a connection function based on the trained unsupervised machine learning model and the at least one trained additional machine learning model (S6); and g.

Providing the combined machine learning model as output (S7).

Further, the invention relates to a computer program product and technical system.

FIG 1

**Description**

1. Technical field

The present invention relates to a computer-implemented method for generating a combined machine learning model. Further, the invention relates to a corresponding computer program product and technical system.

2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used term. It has become not only a major part of today's industry, but it also drives the business in many industrial domains.

Considering complex industrial plants, the industrial plants usually comprise distinct components, parts, modules or units with a multiplicity of individual functions. Exemplary units include sensors and actuators. The units and their functions have to be controlled and regulated in an interacting manner. They are often monitored, controlled and regulated by automation systems, for example the Simatic system of Siemens AG. The increasing degree of digitalization allows for e.g. manufacturing or industrial installation of products in a production line of the industrial plant to be performed by robot units or other autonomous units in an automatic manner and thus efficiently at least in part up to now.

A reliable and robust operation of the machinery is of importance in such industrial environments since any uncertainty, defect or anomaly often has a negative impact such as a decrease of quality and throughput. Severe anomalies such as sudden failures might even lead to downtimes of the industrial plant and hence increased costs, or even personal harms in the worst case.

Hence, the machine learning models deployed and operated on the industrial environments for e.g. control, production or monitoring processes have to be "industrial-graded". This means that the deployed machine learning models have to be reliable and robust, even though, the conditions around its application scenario may change.

Therefore, it is desirable to predict the failures or anomalies before they happen. Prior art data-driven approaches in the context of machine learning are capable to learn to separate between normal and anomalous machine behavior based on previously collected sensor data from the machine (historic data). Once the algorithm has learned the intrinsic behavior it can judge whether new data from the machine is normal or anomalous.

Supervised machine learning uses labelled data such as sensor data, wherein the label indicates in which condition the machine is. On the contrary, unsupervised machine learning uses unlabeled data. The latter case is quite common today, since the machines do not fail that often.

The disadvantage of prior art approaches, however, is that new knowledge or data e.g. new labels from e.g. user feedback or another technical system cannot be incorporated efficiently and reliably into the existing trained machine learning model. According to prior art, the trained machine learning model can be retrained solely with the new data. Retraining on the basis of the new data brings the risk of running into the problem of catastrophic inference. This means that the trained machine learning model forgets the previously learned data resulting in an unstable behavior. Alternatively, the trained machine learning model can be trained with all the available data (new and old data). This retraining approach is however slow and hence time-consuming. The retraining becomes slower the more data is used as input for training. Moreover, in general the old model is disregarded and a complete separate new model is trained.

It is therefore an objective of the invention to provide a computer-implemented method for generating a combined machine learning model in an efficient and a reliable manner.

3. Summary of the invention

This problem is according to one aspect of the invention solved by a computer-implemented method for generating a combined machine learning model, comprising the steps:

    a. Providing a trained unsupervised machine learning model for anomaly detection; wherein the unsupervised machine learning model is trained on the basis of unlabeled training data;

    b. Determining at least one output label for each data item of a plurality of data items of unlabeled application data by applying the trained unsupervised machine learning model on the unlabeled application data with the plurality of data items; wherein the at least one determined output label is an anomaly or a normal state;

    c. Transmitting the at least one determined output label to a user for verifying the at least one determined output label via a user interface;

d. Receiving at least one processed output label, at least one additional data item or at least one additional output label from the user via the user interface or maintaining the at least one determined output label unprocessed depending on the verification by the user;

e. Training at least one additional machine learning model for anomaly detection in accordance with the at least one processed output label, the at least one additional data item or the at least one additional output label;

f. Generating the combined machine learning model for anomaly detection using a connection function based on the trained unsupervised machine learning model and the at least one trained additional machine learning model; and g. Providing the combined machine learning model as output.

Accordingly, the invention is directed to a computer-implemented method for generating a combined machine learning model.

First, a trained unsupervised machine learning model for anomaly detection is received e.g. via an input interface. The trained unsupervised machine learning model can be equally referred to as "anomaly detector", abbreviated with AD in the following. In other words, the trained unsupervised machine learning model is configured for binary classification in context of machine learning.

The unsupervised machine learning model is trained on training data before being applied on application data, as usual in context of machine learning. Accordingly, two distinct data sets are used, one for training and one for application.

Thereby, the training data and the application data each comprise data samples or data items, wherein the data samples are not tagged with one or more labels in the case of unsupervised machine learning. In other words, the data samples or data items are unlabeled. Exemplary data samples or data items are images, text files, videos etc.

In a further step, the unsupervised machine learning model is applied on the application data to detect anomalies. The application of the unsupervised machine learning model results in one or more output labels for each data item of the plurality of data items of the unlabeled application data. The output label can be equally referred to as class. The output label is an anomaly or a normal state. An anomaly can be any kind of faulty machine behavior that is not corresponding to a normal or a healthy operation. There can be different types of anomalies or faults as well as different types of normal operation e.g. normal mode 1, normal mode 2,... etc. Referring to the example of an induction motor, there exist the anomalies such as imbalances and broken bearing. The operation at frequency 45 Hz and the operation at frequency 60 Hz are two types of normal operation modes.
Preferably, the new data items correspond to a new unseen operation mode, therefore they are wrongly classified as an anomaly. The user can correct these incorrect output labels and send it back according to the present invention.

In other words, the class represents either an anomaly or a normal state. Alternatively, the anomaly can be any anormal state, anomalous state, inconsistent state, erroneous state. Alternatively, the output label is a first mode or a second mode, such as operating mode.

In further steps, the detected anomalies or output labels are transmitted via a user interface to a user for verification. The user can be a domain expert. After reception of the output labels, the user performs a verification for each received output label. The user decides whether the output label is maintained or processed.

In case of maintaining the at least one determined output label unprocessed, step e. is skipped. Hence, training at least one additional machine learning model for anomaly detection in accordance with the at least one processed output label or the at least one additional data item is not performed in this case.

In the other case of processing the at least one determined output label, step e. is performed by using the processed at least one determined output label or at least one additional data item provided by the user. Training at least one additional machine learning model for anomaly detection in accordance with the at least one processed output label or the at least one additional data item is performed in this case.

The system is constantly evolving with arbitrary many additional machine learning models. The more feedback the system receives, such as correction of the labels and new data items etc., the more additional machine learning models are incorporated. Preferably, if the user changes several data items simultaneously and then sends the corrected data items back to the system, all of these data items are comprised in one additional machine learning model.

In the last steps, the trained unsupervised machine learning model and the at least one trained additional machine learning model are combined using a connection function and provided as output.

The present invention provides a computer-implemented method for generating a combined machine learning model efficiently and reliably.

Contrary, to prior art, the combined machine learning model combines the original unsupervised machine learning model ("old") trained on the original training data with the additional machine learning model ("new") trained on the additional or new training data e.g. additional data item etc. Catastrophic interference or catastrophic forgetting as a result of prior art retraining solely on the basis of new training data is avoided

Moreover, the user interference allows to interact with user to consolidate, validate or verify the result in the form of output labels. This way, classes or labels can be incorporated and learned, as well as wrongly or badly labelled data can be corrected by the user.

The combined machine learning model is significantly improved and leads to an improved prediction result in the sense of anomaly detection after deployment e.g. on the industrial plant. For example, the anomalies are detected sooner and more reliably. This leads to less downtimes and less injuries.

The combined machine learning model can be deployed. Moreover, the system is thought to be constantly evolving and can change in the future to include several combined machine learning models. The advantage of the present invention is to quickly start with a small and simple system that then grows over time the more the model learns and the more data is acquired.

In one aspect, the processing comprises at least one processing step, selected from the group comprising: Adapting the determined at least one output label. Accordingly, the at least one output label can be adapted or changed, e.g. corrected by the user. The output label "anomaly" can be changed to the output label "normal state". The output label "normal state" can be changed to the output label "anomaly". The adaptation comprises moreover e.g. the deletion of the output label or the extension of the output label.

In a further aspect, the at least one additional machine learning model is an unsupervised or supervised machine learning model. Accordingly, any machine learning model can be used as additional machine learning model and combined with the original provided unsupervised machine learning model in a flexible and reliable manner.

In a further aspect, the connection function is a logical function or logical operator, preferably an AND and OR logical operator.

In a further aspect, the connection function is a weighted function.

A further aspect of the invention is a computer program product directly loadable into an internal memory of a computer, comprising software code portions for performing the aforementioned method steps when said computer program product is running on a computer.

A further aspect of the invention is a technical system for performing the aforementioned method steps.

4. Short description of the drawings

In the following detailed description, presently preferred embodiments of the invention are further described with reference to the following figures:

Fig. 1    illustrates a flowchart of the computer-implemented method according to the invention.

Fig. 2    shows a schematic representation of the technical system according to an embodiment.

Fig. 3    illustrates the weights of the connection function as a function of the labels, wherein the connection function is a weighted function according to an embodiment.

5. Detailed description of preferred embodiments

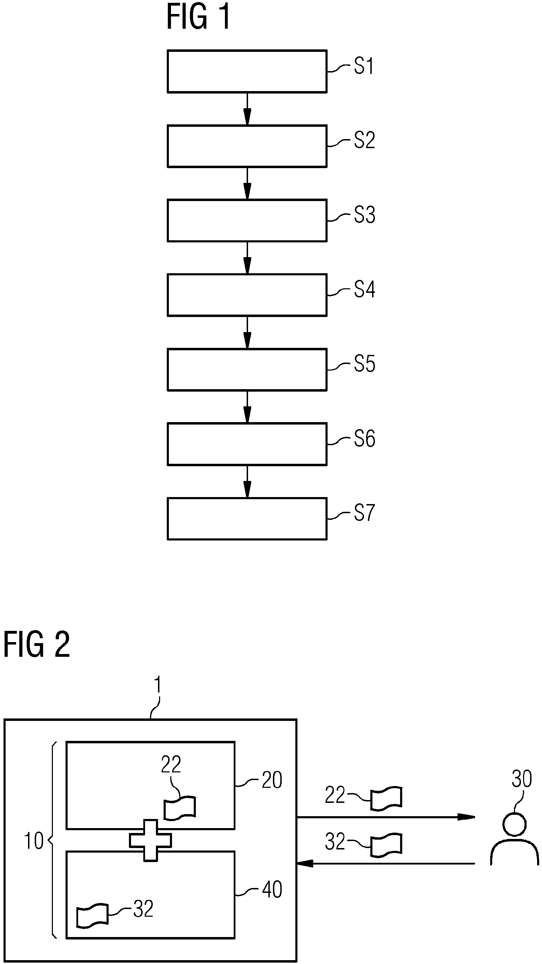

Figure 1 illustrates a flowchart of the method according to the invention with the method steps S1 to S7.

Fig. 2 shows a schematic representation of the technical system according to an embodiment.

Generating a combined machine learning model 10

The provided unsupervised machine learning model 20, denoted with $f(X)$ and AD for anomaly detector, is trained based on unlabeled training data X before being applied on the application data S1. The training data and the application data each comprise data items. Then, the unsupervised machine learning model 20 is applied on the application data resulting in output labels 22, S2. The unsupervised machine learning model can e.g. use a regression or a classification algorithm (i.e., a score, a probability).

According to an embodiment, the output label can be determined with $f(X) < 0$ for the anomaly and with $f(X) > 0$ for the normal state. Alternatively, the output label can be determined with $0 < f(X) < 1$, thereby $f(X) < 0.5$ corresponds to the anomaly and $f(X) > 0.5$ corresponds to the normal state.

Exemplary machine learning models are Neural Network, Autoencoder, Random Forest, Gradient Boosting and Logistic Regression etc.

The output labels 22 are outputted to a user 30 for interaction S3. Preferably a domain expert 30 is assigned for verification.

The user 30 can decide to maintain the output label 22 or to process the output label 22, S4. In case of maintenance, the trained unsupervised machine learning model 20 remains constant and no additional machine learning model 40 is trained. In the other case, e.g. an additional data item or an additional output label 32 can be added and provided by the user 30. Alternatively, the output label 22 can be corrected etc. Hence, in this other case, the original unsupervised machine learning model 20 gets extended by at least one additional machine learning model 40, denoted with $g_i(Z)$ with $i \in I = \{1,...,k\}$ where k is the number of additional models.

Thereby, the at least one additional machine learning model 40 is trained on the input data Z received from the user S4, S5. The trained unsupervised machine learning model 20 remains unchanged. The at least one additional machine learning model 40 can be designed as supervised or unsupervised machine learning model e.g. depending on the use case, technical system or the available data.

The trained unsupervised machine learning model 20 and the at least one trained additional machine learning model 40 are combined using a connection function S6, denoted with $h(f(X),g(Z))$. In case of a plurality of additional machine learning models 40: $g(Z) = g(g_i(Z), i \in I)$ is an ensemble of additional machine learning models. The combined machine learning model 10 is provided as output.

This solution applies if either new data Z with new labels becomes available or new labels for the old data X become available.

The new labels can either become available through new information or if the user adds its own labels to the available data. It is assumed that a new dataset Z is available together with new labels L. If multiple models are learned from a stream of incoming labels e.g., labels $L_1$ with $|L_1| = l_1$ are available for retrain at a given timepoint and later labels $L_2$ with $|L_2| = l_2$ become available, multiple models $g_1$ and $g_2$ are learned.

Given labels $L_i$ and corresponding data, a supervised algorithm $g_i$ is learned. Therefore, any supervised learning algorithm suitable for classification or regression e.g. a Neural Network Classifier, a Random Forest Classifier, a Gradient Boosted Tree classifier etc. can be used.

In case an intrinsically interpretable model (e.g., logistic regression, decision tree) is chosen, the additional machine learning model $g_i$ can be used to make the result more interpretable. Given the model f and the newly trained model $g_i$ it must be decided on how to aggregate their decision given new data Y, especially if $g_i(Y) \neq f(Y)$. This is achieved by the connection function, that can either be static (see the following section) or a function depending on the number of labels $l_i$ available (the labels used to train $g_1(Y)$) (see section "Connection function is a weighted function").

Connection function is a logical function (static) Add a non-anomaly/normal

A certain situation (that was detected as an anomaly before) is treated as non-anomaly/normal.

Constraint:

All past non-anomalies should remain non-anomalies. The reason is that more cannot be expected, since the anomaly behavior must change.

Solution:

The unsupervised machine learning model AD1/$f(X)$ is e.g. trained with previous non-anomaly.

The additional machine learning model AD2/$g(Z)$ is trained only with to-be-added non-anomaly.

The connection function $h(f(X), g(Z)) = $ AD1 and AD2 is used, wherein the anomaly is there, if both detectors detect the anomaly and hence the constraint is fulfilled.

Add an anomaly

A certain situation (that was detected as a non-anomaly/normal before) is treated as anomaly.

Constraint:

All past anomalies should remain anomalies. The reason is that more cannot be expected, since the non-anomaly/normal behavior must change.

Solution:

The unsupervised machine learning model AD1/$f(X)$ is trained with previous non-anomaly. The additional machine learning model AD2/$g(Z)$ is trained only with the to-be-added anomaly (note: inverted behavior). The connection function $h(f(X), g(Z)) = $ AD1 or not AD2 is used.

If not only the binary anomaly information is requested, but also an anomaly score, the score can be updated as follows:

If both models give an anomaly the combined score is the minimum of both, i.e. min(SCORE1, SCORE2). If only one of the models is indicating an anomaly the score of this model is the combined score. If both models indicate no-anomaly also the maximum of both is taken.

It is assumed that positive values indicate the degree of anomaly with zero, or negative values, being the case of "no-anomaly". If this is inverted and negative values indicate the degree of anomaly, a simple multiplicative inversion is preferably applied to the score before and after applications of the above rules.

Connection function is a weighted function (evolving depending on the new labels)

The connection function can be a function depending on the number of labels $l_i$ available (the labels used to train $g_1(Y)$).

In the simplest case only one additional model (i.e. $l_1 = l$) is considered:

$$h(Y) = h(f(Y), g(Y), l) = \alpha(l)q\big(f(Y)\big) + \beta(l)g_1(Y)$$

where $q(f(Y))$ maps the outcomes of the original model $f(Y)$ into the same outcome space as the new model $g_1(Y)$.

Here an example, if $f(Y)$ outputs a score in $\mathbb{R}$, and $g_1(Y)$ outputs a probability, $q\big(f(Y)\big) = \{\frac{1}{1+\exp\{-f(Y)\}}\}$ being a sigmoid mapping to (0,1) would be appropriate, but this depends on the concrete algorithms $f(Y)$ and $g_1(Y)$.

Moreover, the following equation is considered

$$\alpha(l) > 0, \ \beta(l) > 0, \alpha(l) + \beta(l) = 1, \frac{\partial \alpha(l)}{\partial l} < 0 \text{ and } \frac{\partial \beta(l)}{\partial l} > 0 \ \forall \, l \ \in \mathbb{N}$$

Where $\alpha(l)$ and $\beta(l)$ are the corresponding weights in the connection function.

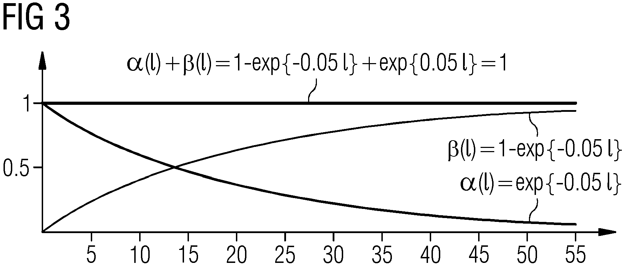

A practical example would be $\alpha(l) = \exp(-\zeta l)$ and $\beta(l) = 1 - \exp(-\zeta l)$ for $\zeta > 0$. For the special case $\zeta = 0.05$, these weights as a function of the labels $l$ are shown in Figure 3.

In the case of more than one classifier, (i.e. $k > 1$), $h(Y)$ is defined as a weighted average

$$h(Y) = h(f(Y), g(Y), l_1, \dots, l_k) = \alpha(l_1, \dots, l_k)q(f(Y)) + \sum_{i \in I} \beta_i(l_i)g_i(Y)$$

where

$$\alpha(l_1, \dots, l_k) > 0, \ \beta_i(l_i) > 0, \ \alpha(l_1, \dots, l_k) + \sum_i \beta_i(l_i) = 1, \frac{\partial \alpha(l_1, \dots, l_k)}{\partial l_i} < 0 \text{ and } \frac{\partial \beta_i(l)}{\partial l} > 0 \ \forall \, i = 1, \dots, k, l_i \in$$

$$\mathbb{N}$$

Given these definitions, the original model $f(X)$ gets overruled as a function of the available labels. If $f(X)$ is an unsupervised algorithm, it turns gradually into a supervised one, which can be seen in Figure 3 as the weight $\alpha(l)$ which is decreasing with an increasing number of added labels. Each of the new classifiers will get a weight according to the number of labels that have been used to train it. From the weights $a(l_1, \dots, l_k), \beta_i(l_i)$ it becomes fully transparent for a given instant which model or models decided for which outcome. If the models $g_i$ are interpretable themselves the prediction is fully understandable.

Reference signs

1    technical system
10   combined machine learning model
20   trained unsupervised machine learning model

22    output label
30    user
32    processed output label, additional data item and additional output label
40    additional machine learning model

**Claims**

1.  Computer-implemented method for generating a combined machine learning model (10), comprising the steps:

    a. Providing a trained unsupervised machine learning model for anomaly detection (20); wherein the unsupervised machine learning model (20) is trained on the basis of unlabeled training data (S1);
    b. Determining at least one output label (22) for each data item of a plurality of data items of unlabeled application data by applying the trained unsupervised machine learning model (20) on the unlabeled application data with the plurality of data items; wherein the at least one determined output label (22) is an anomaly or a normal state (S2);
    c. Transmitting the at least one determined output label (22) to a user (30) for verifying the at least one determined output label (22) via a user interface (S3);
    d. Receiving at least one processed output label (32), at least one additional data item (32) or at least one additional output label (32) from the user (30) via the user interface or maintaining the at least one determined output label (22) unprocessed depending on the verification by the user (30) (S4);
    e. Training at least one additional machine learning model (40) for anomaly detection in accordance with the at least one processed output label (32), the at least one additional data item (32) or the at least one additional output label (32) (S5);
    f. Generating the combined machine learning model (10) for anomaly detection using a connection function based on the trained unsupervised machine learning model (20) and the at least one trained additional machine learning model (40) (S6); and
    g. Providing the combined machine learning model (10) as output (S7).

2.  Computer-implemented method according to claim 1, wherein the processing comprises at least one processing step, selected from the group comprising:
    Adapting the determined at least one output label (22).

3.  Computer-implemented method according to claim 1 or claim 2, wherein the at least one additional machine learning model (40) is an unsupervised or supervised machine learning model.

4.  Computer-implemented method according to any of the preceding claims, wherein the connection function is a logical function or logical operator, preferably an AND and OR logical operator.

5.  Computer-implemented method according to any of the claims 1 to 3, wherein the connection function is a weighted function.

6.  A computer program product directly loadable into an internal memory of a computer, comprising software code portions for performing the steps according any of the preceding claims when said computer program product is running on a computer.

7.  A technical system (1), configured for performing the steps according any of the claims 1 to 5.

## FIG 1

S1

S2

S3

S4

S5

S6

S7

## FIG 2

1

10

22

20

22

30

32

40

32

# FIG 3

$$\alpha(l)+\beta(l)=1\text{-exp}\{\text{-0.05 }l\}+\text{exp}\{0.05\,l\}=1$$

$$\beta(l)=1\text{-exp}\{\text{-0.05 }l\}$$

$$\alpha(l)=\text{exp}\{\text{-0.05 }l\}$$

**EUROPEAN SEARCH REPORT**

Application Number

EP 21 18 7698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SETHI TEGJYOT SINGH ET AL: "A grid density based framework for classifying streaming data in the presence of concept drift", JOURNAL OF INTELLIGENT INFORMATION SYSTEMS: ARTIFICIALINTELLIGENCE AND DATABASE TECHNOLOGIES, KLUWER ACADEMIC PUBLISHERS, AMSTERDAM, NL, vol. 46, no. 1, 9 May 2015 (2015-05-09), pages 179-211, XP035913736, ISSN: 0925-9902, DOI: 10.1007/S10844-015-0358-3 [retrieved on 2015-05-09] * abstract; Sections 1, 3-5; figures 4, 7, 8 * | 1-7 | INV. G06N20/20 |
| A | TANG XUNING ET AL: "Deep Anomaly Detection with Ensemble-Based Active Learning", 2020 IEEE INTERNATIONAL CONFERENCE ON BIG DATA (BIG DATA), IEEE, 10 December 2020 (2020-12-10), pages 1663-1670, XP033889087, DOI: 10.1109/BIGDATA50022.2020.9378315 [retrieved on 2021-03-12] * abstract; Sections I-IV; figures 1,2 * | 1-7 | |

TECHNICAL FIELDS SEARCHED (IPC)

G06N

-/--

The present search report has been drawn up for all claims

| Place of search | Date of completion of the search | Examiner |
|---|---|---|
| The Hague | 20 January 2022 | Klasen, TJ |

page 1 of 3

EUROPEAN SEARCH REPORT

Application Number

EP 21 18 7698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VEERAMACHANENI KALYAN ET AL: "AI^2: Training a Big Data Machine to Defend", 2016 IEEE 2ND INTERNATIONAL CONFERENCE ON BIG DATA SECURITY ON CLOUD (BIGDATASECURITY), IEEE INTERNATIONAL CONFERENCE ON HIGH PERFORMANCE AND SMART COMPUTING (HPSC), AND IEEE INTERNATIONAL CONFERENCE ON INTELLIGENT DATA AND SECURITY (IDS), IEEE, 9 April 2016 (2016-04-09), pages 49-54, XP032917725, DOI: 10.1109/BIGDATASECURITY-HPSC-IDS.2016.79 [retrieved on 2016-06-30] * abstract; Sections I, II, IV-VI; figure 2 * | 1-7 | |
| A | US 2020/019852 A1 (YOON ANDRE S [KR] ET AL) 16 January 2020 (2020-01-16) * paragraph [0006] – paragraph [0021]; paragraph [0047] – paragraph [0118]; figures 3-9 * | 1-7 | |
| | | | TECHNICAL FIELDS SEARCHED (IPC) |
| A | WAEL KHREICH ET AL: "Incremental Boolean Combination of Classifiers", 15 June 2011 (2011-06-15), ADVANCES IN BIOMETRICS : INTERNATIONAL CONFERENCE, ICB 2007, SEOUL, KOREA, AUGUST 27 – 29, 2007 ; PROCEEDINGS; [LECTURE NOTES IN COMPUTER SCIENCE; LECT.NOTES COMPUTER], SPRINGER, BERLIN, HEIDELBERG, PAGE(S) 340 – 349, XP019164275, ISBN: 978-3-540-74549-5 * abstract; Sections 1-3 * | 4 | |

-/--

The present search report has been drawn up for all claims

| Place of search | Date of completion of the search | Examiner |
|---|---|---|
| The Hague | 20 January 2022 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 21 18 7698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRATAMA MAHARDHIKA ET AL: "Online Tool Condition Monitoring Based on Parsimonious Ensemble+", IEEE TRANSACTIONS ON CYBERNETICS, [Online] vol. 50, no. 2, February 2020 (2020-02), pages 664-677, XP055880970, Piscataway, NJ, USA ISSN: 2168-2267, DOI: 10.1109/TCYB.2018.2871120 Retrieved from the Internet: URL:https://ieeexplore.ieee.org/stampPDF/getPDF.jsp?tp=&arnumber=8490672&ref=> [retrieved on 2022-01-19] * abstract; Sections I-V; figure 1 * | 1-7 | |
| | | | TECHNICAL FIELDS SEARCHED (IPC) |

The present search report has been drawn up for all claims

| Place of search | Date of completion of the search | Examiner |
|---|---|---|
| The Hague | 20 January 2022 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 21 18 7698

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2022

| Patent document cited in search report | Publication date | Patent family member(s) | Publication date |
|---|---|---|---|
| US 2020019852 A1 | 16-01-2020 | KR 101940029 B1<br>US 2020019852 A1<br>US 2020410350 A1 | 18-01-2019<br>16-01-2020<br>31-12-2020 |

EPO FORM P0459

For more details about this annex : see Official Journal of the European Patent Office, No. 12/82